# EUROPEAN PATENT APPLICATION

(11) **EP 1 248 252 A2**
(43) Date of publication of application: **09.10.2002**
(21) Application number: 02076160.7
(22) Date of filing: 25.03.2002
(51) Int. Cl.: G10L 19/14, G06F 9/38

(54) **Accelerator architecture for a speech codec**

(30) Priority: 02.04.2001 US 825377
(71) Applicant: Amphion Semiconductor Limited, Belfast BT9 5BS (GB)
(72) Inventor: Zun, Zhiping, Belfast BT8 6XW, Northern Ireland (GB); Hu, Yi, Belfast, Northern Ireland (GB)
(74) Representative: Wallace, Alan

(57) **Abstract**

A codec (110) comprising a programmed digital signal processor (112) and an accelerator core (116) in which computation of a coding algorithm is divided between the digital signal processor (112) and the accelerator core (116), computationally relatively intensive parts of a coding algorithm being performed by the accelerator core. In the preferred embodiment, the instruction set is optimised to perform CELP coding of speech signals.

## Description

This invention relates to codecs. It has particular, but not exclusive application to a codec for speech encoding using code-excited linear prediction (CELP) coding.

CELP coding is a coding system that is specifically designed to encode human speech to enable it to be transmitted over a low-bandwidth link. CELP coding is based on the principles of linear prediction analysis-by-synthesis (AbS) coding in which an algorithm finds a code vector by attempting to minimise a perceptually weighted error signal. The analysis-by-synthesis of speech includes speech feature extraction, vector quantisation (VQ) and speech reconstruction. Standards for implementing CELP coding have been established internationally, for example, in ITU-T standards ITU G723.1 and G729.

As a computational task, CELP encoding involves generating a spectral analysis of a speech signal and generating coded data through a process including codebook searching and error minimisation. It requires a large codebook storage if high speech-quality is to be obtained, which leads to intensive computation in the coding process. ITU standard G723.1, for example, defines a 10K x 16-bit words table to support 5.3 or 6.3 kbits/sec compression rates. When encoding, this requires computing power of about 26 MIPS to complete speech data in real time. Clearly, if such coding is to be performed in real-time, a software implementation in a general-purpose computer is possible only if substantial computing resources are available. It is therefore common to implement CELP coding in dedicated hardware for example, in a digital signal processor (DSP) chip core.

For single channel application, the CELP algorithm can implemented using a programmable DSP chip. At present, a modern DSP chip can handle about 4 duplex channels. If an application relies on multiple channels, (for example 32 or 64 channels), it needs multiple (e.g. 8 or 16) DSP chips to work together. Each DSP chip has its own large store for the data table. This results in a very complicated multiple DSP chip system, which is difficult to design and expensive to build. At present, there is a demand for a codec capable of performing CELP and other encoding functions substantially more quickly and at greatly reduced cost than is possible using systems that have hitherto been available. An aim of this invention is to provide such a codec.

### SUMMARY OF THE INVENTION

Based on the study of CELP algorithm, it has been found that the CELP algorithm can be partitioned into two parts: part I includes speech feature extraction and part II includes VQ and speech reconstruction. It has been found that computation in part I is relatively less intensive, and is irregular. The computation in part I accounts for only about 8% of the total amount of computation required to perform the entire CELP algorithm. The major functions in the part II are variance and covariance computation, and codebook searching. These are regular operations that require a large amount of computation and storage capacity.

In the light of the divergent nature of these two parts of the algorithm, the inventors have realised that it may be appropriate to implement a codec as a hybrid structure.

According to the invention there is provided a codec comprising a programmed digital signal processor and an accelerator core in which computation of a coding algorithm is divided between the digital signal processor and the accelerator core, computationally relatively intensive parts of a coding algorithm being performed by the accelerator core.

By means of this arrangement, optimal use of the hardware can be made without the creation of bottlenecks or of under-utilisation of hardware. Typically, part I, as identified above, is performed by a DSP, and part II is assigned to the accelerator core.

In typical embodiments, the accelerator core includes a processor structure that is capable of processing multiple items of data simultaneously. It has been found that many algorithms that a codec can be programmed to execute are susceptible to efficient implementation using parallel processing techniques. In such embodiment, the processor may, for example, be a vector processor. A vector processor may be implemented with a single-instruction multiple-data architecture.

Advantageously, the processor structure has an instruction set that is optimised to perform encoding to a predetermined standard. This can help to enhance the efficiency of the codec by tailoring it to the function that it is to perform. For example, the instruction set may be optimised to perform CELP coding of speech signals.

In a preferred arrangement, the accelerator core has includes a plurality of similar operational units capable of carrying out simultaneous data processing operations. In such embodiments, an operation can be assigned for performance by one or more of the operational units on a plurality of data elements. It should be noted that an instruction might be performed by one operational unit, by a group of such operational units, or by all of the operational units. Most advantageously, the accelerator core is configured such that the number of operational units that perform a given operation can be determined under programmatical control.

The accelerator core of embodiments of the invention might typically include a register bank, the operational units performing operations on data stored in the register bank. This provides a store of data to which the operational units can gain rapid read and write access.

Each operational unit can, in preferred embodiments, perform operations on data from several sources. For example, each operational unit may perform operations upon the content of the register bank or upon the output of one or more of the operational units.

Moreover, it is further preferred that each operational unit can store the result of an operation in various locations including, for example, the register bank. An operation might additionally be performed on the outputs of a plurality of the operational units to derive a further output value. Specifically, in many embodiments, a plurality of the operational units can be summed.

Advantageously, each operational unit can access a common memory unit being a component of a codec embodying the invention. The common memory unit may include a ROM and/or a RAM.

In embodiments of the invention, each operational unit is a MAC (multiplier/accumulator) unit.

In preferred embodiments, the accelerator core may be operative to execute program instructions as a vector processor. In order to provide a versatile construction, the program instructions may advantageously be executed as microcode. Such embodiments typically include a decoder by means of which instructions can be decoded for execution by one or more operational units. In some embodiments, the decoder may include a finite state machine. Alternatively or additionally, the decoder may include a programmed memory device.

The invention further provides a computer program comprising program instructions arranged to generate, in whole or in part, a codec according to the invention. The codec may therefore be implemented as a set of suitable such computer programs. Typically, the computer program takes the form of a hardware description, or definition, language (HDL) which, when synthesized on a hardware synthesis tool, generates semiconductor chip data, such as mask definitions or other chip design information, for generating a semiconductor chip. The invention also provides said computer program stored on a computer useable medium. The invention further provides semiconductor chip data, stored on a computer usable medium, arranged to generate, in whole or in part, a codec according to the invention.

An embodiment of the invention will now be described in detail, by way of example and with reference to the accompanying drawings, in which:
Figure 1 is a block diagram of a codec for performing CELP encoding being an embodiment of the invention;
Figure 2 is a block diagram of an accelerator core being a component of the embodiment of Figure 1;
Figure 3 is a block diagram of a vector processor being a component of the core of Figure 2;
Figure 4 is a more detailed diagram of the core of Figure 2;
Figure 5 is a block diagram of a MAC function unit being a component of the processor of Figures 3 and 4;
Figure 6 shows the structure of the accumulator and compare unit of the MAC of Figure 5;
Figure 7 shows the structure of the register bank of the MAC unit of Figure 7;
Figure 8 illustrates the interconnection of the ten MAC function units and the ACU block in the processor of Figures 3 and 4; and
Figure 9 shows the interconnection between the processor of Figures 3 and 4, the operation unit and the register bank.

An embodiment of the invention provides the functionality of a CELP codec.

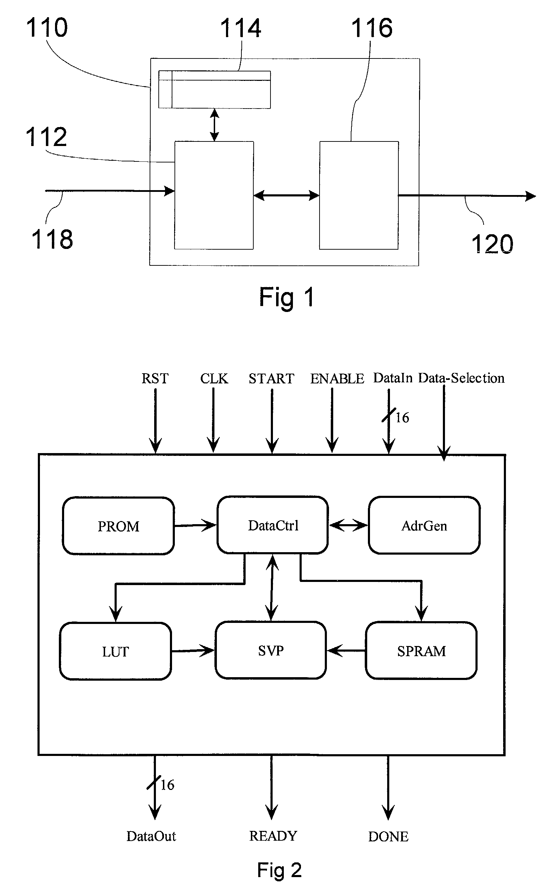

As shown in Figure 1, the codec 110 comprises a digital signal processor (DSP) 112, which has read and write access to a system memory device 114. The DSP 112 is in communication with an accelerator core 116. Speech signals for coding are received by the DSP 112 on an input line 118, and fed to the accelerator core 116 which generates an encoded output on an output line 120.

The basic structure of the accelerator core 116 is shown in Figure 2.

The accelerator core comprises six function blocks, namely a microcode instruction PROM (PROM), data flow control (DataCtrl), data address generation (AdrGen), 10-sub-look-up-table (LUT), a processor core referred to as a super vector processor (SVP) and RAM blocks (SPRAM).

The accelerator core has six input lines identified as CLK, RST, ENABLE, START, RATESELECTION and DataIn, the latter being 16 bits wide. It also has three output lines labeled DataOut, READY and DONE. The ENABLE signal controls the operational status of the accelerator core. When the START signal is asserted, the FSM function starts to work which load the data to the single port RAM then carry out all operation for encode or decode. When the process is finished, the DONE is set to high, the processed data can be read out through the output port, DataOut. The READY signal is set to high when the data output is complete.

The RATESELECTION input is provided to specify which encoding rate of the encoding standard is to be applied to the input data. This will specify the number of input data bits generated in the output for a given input.

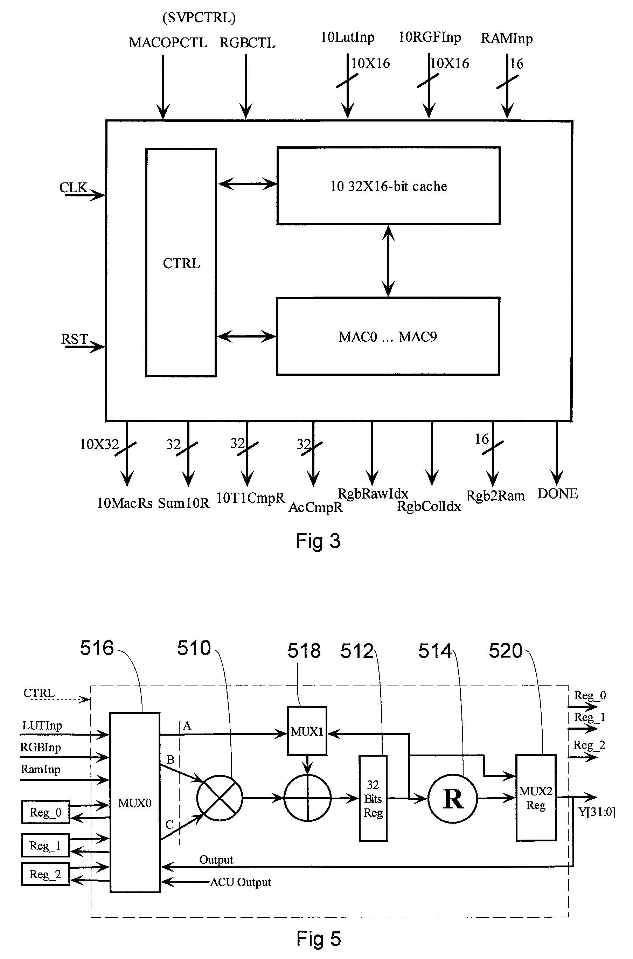

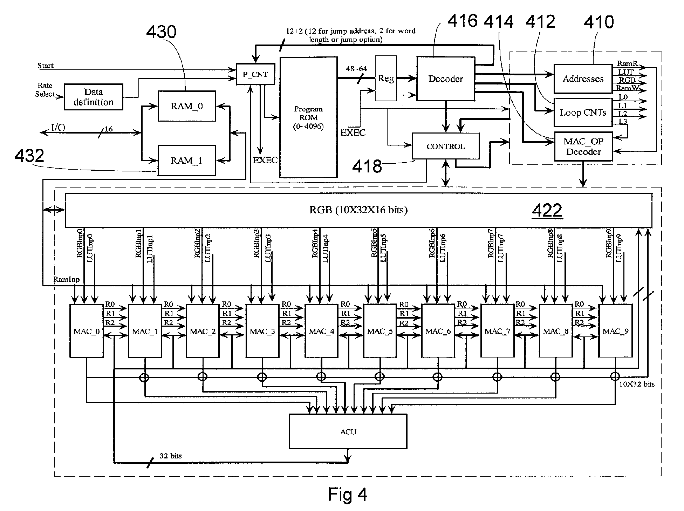

Figures 3 and 4 show the architecture of the SVP component. The SVP includes 10 MAC units (MAC_0 .. MAC_9), an accumulator (ACU), a data address generator 410, loop control counters 412, MAC operation code decoder 414, micro code decoder 416, a control block 418, a program counter P_CNT, a compare unit, and a 10 x 32 x 16 bits register bank 422, as shown in Figure 4. There are 5 input ports, identified as MACOPCTL, RGBCTL, 1OLutInp 10RGFInp and RAMInp. The SVP includes two single-port RAM blocks 430,432 for received data, and processed data storage. The data bus is 16 bits wide and the micro control word has 64 bits.

The MACOPCTL input is decoded at the MAC operation code decoder 414 block, and drives the SVP in various arithmetic operations. The MACOPCTL input includes a 31-bit control word. It indicates which operation the MACs will carry out or accumulation over 10 MAC function units. The RGBCTL input includes an 8-bit control word. It represents the position of data in RGB to be read and written.

At any operation cycle, each of the MACs accept the same operation instruction and carries out the same operation. The 10LutInp (10 x 16-bits) is related to the 10 sub-table files. The 10RGFInp (10 x 16-bits) is connected to the 10 registers, which deal with the individual data. The RAMInp (16-bits) is for the SPRAM data to be read and written.

There are 8 output ports, namely 10MacRs Sum10R, 10T1CmpR, AcCmpR, RgbRawIdx, RgbColIdx, Rgb2Ram and DONE. The 10MacRs represents 10 x 32-bit output data from 10 MACS. The Sum10R is a 32-bit output, which sums over 10 outputs of MAC function unit. The 10T1CmpR presents a maximum value among the 10MacRs. The AcCmpR presents a maximum value over a period of operation. The RgbRawIdx and RgbColIdx are data position indicators, which are related to the comparison results stored in the RGB. When the DONE output is high, the output results of SVP are available. The SVP has 10 MAC operation units and its local storage, which provides the CELP accelerator core with the ability to handle a computationally-intensive DSP algorithm efficiently.

When the START input is high, the P_CNT counter is set into operation. The Rata_selection signal will select an start point and end point from data definition block to set the P_CNT counter.

The P_CNT counter produces an executive signal "EXEC" whenever a complete micro word has been read. The EXEC signal will drive all of the function blocks to carry out the task specified by the micro word. The P_CNT counter then moves to the next address, until the end point is reached.

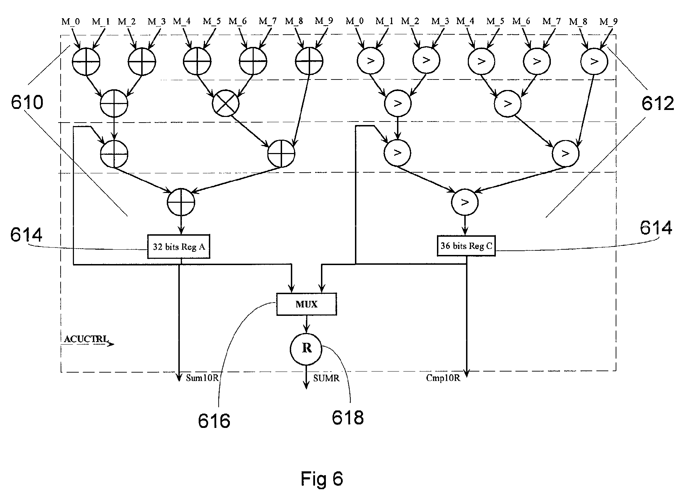

The structure of each MAC unit is shown in Figure 5. The MAC unit has one 16 x 16-bit multiplier 510, one 32-bit accumulator 512, one rounding function 514, and three multiplexers 516,518,520. A control word, CTRL, indicates the input data and function operation in the MAC function unit.

The control word, CTRL, has 24 bits, which is partitioned into six parts. The definition of control word for MAC function unit is shown in Table 1, below.

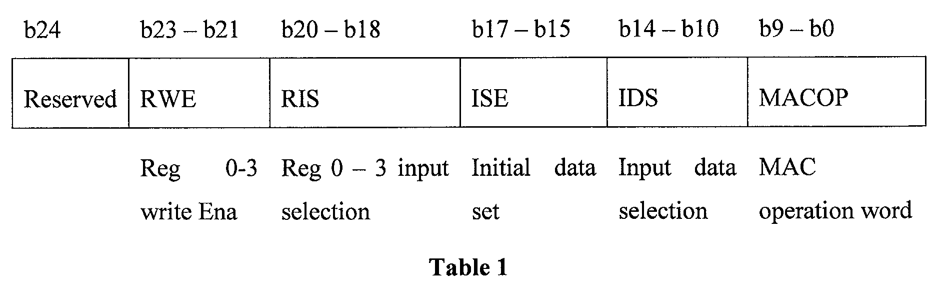

The input data selection (IDS) represent two input data items (B and C) selected from six possible input data sources, namely LUTInp, RGBInp, RamInp, Reg_0, Reg_1 and Reg_2. Table 2 shows the possible combination of IDS instruction definitions.

**Table 2**

| Index | Input1(B), input 2(C) | description |
|---|---|---|
| 00000 | NULL, NULL | No inputs are selected |
| 00001 | Reg_0, Reg_0, | Reg_0*Reg_0 |
| 00010 | Reg_0, Reg_1 | Reg_0*Reg_1 |
| 00011 | Reg_0, Reg_2 | Reg_0*Reg_2 |
| 00100 | Reg_0, LUTInp | Reg_0*LUTInp |
| 00101 | Reg_0, RGBInp | Reg_0*RGBInp |
| 00110 | Reg_0, RamInp | Reg_0*RamInp |
| 00111 | Reg_1, Reg_1 | Reg_1*Reg_1 |
| 01000 | Reg_1, Reg_2 | Reg_1*Reg_2 |
| 01001 | Reg_1, LUTInp | Reg_1*LUTInp |
| 01010 | Reg_1, RGBInp | Reg_1*RGBInp |
| 01011 | Reg_1, RamInp | Reg_1*RamInp |
| 01100 | Reg_2, Reg_2 | Reg_2*Reg_2 |
| 01101 | Reg_2, LUTInp | Reg_2*LUTInp |
| 01110 | Reg_2, RGBInp | Reg_2*RGBInp |
| 01111 | Reg_2, RamInp | Reg_2*RamInp |
| 10000 | RGBInp, RGBInp | RGBInp * RGBInp |
| 10001 | RGBInp, RamInp | RGBInp * RamInp |
| 10010 | RGBInp, LUTInp | RGBInp * LUTInp |
| 10011 | RamInp, RamInp | RamInp* Ramlnp |
| 10100 | RamInp,, LUTInp | RamInp* LUTInp |
| 10101 | reserved | |
| 10110 | reserved | |
| 10111 | reserved | |
| 11000 | reserved | |
| 11001 | reserved | |
| 11010 | reserved | |
| 11011 | reserved | |
| 11100 | reserved | |
| 11101 | reserved | |
| 11110 | reserved | |
| 11111 | reserved | |

The initial value set (ISE) specifies an initial data selection when the accumulator is in operation. The initial value may be set to zero or other value provided by the RGBInp, Reg_0, Reg_1 or Reg_2. Table 3 shows the combinations of the ISE.

**Table 3**

| Index | Initial Data | Description |
|---|---|---|
| 000 | 0 | Set the initial value to zero |
| 001 | Reg_1, Reg_0 | Set the initial value as a (Reg_1&Reg_0) |
| 010 | Reg_2, RGBInp | Set the initial value as a (Reg_2& RGBInp) |
| 011 | MAC_output | Set the initial value as MAC output |
| 100 | 32 bit register | A 32 bit buffer |
| 101 | reserved | |
| 110 | reserved | |
| 111 | reserved | |

The register input signal selection **(RIS)** is a control signal to select an input signal for the three registers. Table 4 shows the combination of the input signals to the registers.

**Table 4**

| Index | Input value | Description |
|---|---|---|
| 000 | 0 | Reset the registers |
| 001 | RAMInp | Input RAMInp value to registers |
| 010 | RGBInp | Input RGBInp value to registers |
| 011 | Output_L, Output_H | Input (Output_L, Output_H) to registers |
| 100 | Reg0_N-1 | Register0_N =Register0_N-1 (N=0; 9) |
| 101 | Reg1_N-1 | Register1_N =Register1_N-1 (N=0; 9) |
| 110 | Reg2_N-1 | Register2_N =Register2_N-1 (N=0; 9) |
| 111 | ACU output | Accumulator/compare unit output |

The register input write enable **(RWE)** is a control signal to enable an input signal write to the registers, and a 1-bit control one register. Table 5 shows the combination of the register write enable signal.

**Table 5**

| Index | Register Enable | Description |
|---|---|---|
| 000 | NULL | Registers can not be written |
| 001 | Reg_0 Enable | Reg_0 write enable |
| 010 | Reg_1 Enable | Reg_1 write enable |
| 011 | Reg_0, Reg_1 Enable | Reg_0 and Reg_1 write enable |
| 100 | Reg_2 Enable | Reg_2 write enable |
| 101 | Reg_0, Reg_2 Enable | Reg_0 and Reg_2 write enable |
| 110 | Reg_1, Reg_2 Enable | Reg_1 and Reg_2 write enable |
| 111 | All enable | Reg_0, Reg_1 and Reg_2 write enable |

The MAC operation word **(MACOP)** is to control the MAC unit operation. It is 10 bits wide. Tables 6 and 7 describes the function of each bit. The combination of 10 bits can carry out most arithmetic operations used in CELP algorithm. For example, Table 6 lists some MAC operation code.

**Table 6**

| Index of bit | description |
|---|---|
| 0 | 0: signed, 1: unsigned |
| 1 | Indicates the first input of an input sequence, also resets the overflow and carry flag, active HIGH, |
| 2 | Indicates the last input of an input sequence, active HIGH |
| 3, 4 | 00: no shift 01: left shift by 1 bit, 10: right shift by 15 bits 11: right shift by 15 bits with rounding |
| 5 | controls the accumulator's operation: 0: add the product to the previous accumulated result, 1: subtract the product from the previous accumulated result |
| 6 | controls the number of bits upon which the accumulation is based: 0: 32 bits based operation 1:16 bits based operation |
| 7 | controls the loading of output register: 0: disable loading 1: enable loading |
| 8 | Output with rounding, active HIGH |
| 9 | reserved |

**Table 7**

| code | Combination of 10 bits | description |
|---|---|---|
| MAC_NUL | 1000000000 | No action |
| MAC_MULT | 1010010110 | Y[15:0] =(A[15:0]*B[15:0]>>16)+INIT |
| MAC_MULT_R | 1010011110 | A*B with rounding and right shift 15 bits |
| MAC_L_MULT | 1010001110 | Y[31:0]=A[15:0]*B[15:0] |
| MAC_L_MLS0 | 1010010011 | 32bits and 16 bits multiplier, first part |
| MAC_L_MLS1 | 1010001100 | 32bits and 16 bits multiplier, second part |
| MAC_L_MAC0 | 1010001010 | first data of accumulation of two 16-bit multiply with right shift by 1, |
| MAC_L_MAC | 1010001000 | Accumulation of two 16-bit multiply with right shift 1 |
| MAC_L_MAC1 | 1010001100 | Last data of accumulation of two 16-bit multiply with right shift by 1 |
| MAC_L_MACR0 | 1010011010 | First data of accumulation of two 16-bit multiply with right shift by 15 |
| MAC_L_MACR | 1010011000 | Accumulation of two 16-bit multiply with right shift by 15 |
| MAC_L_MACR1 | 1010011100 | Last data of accumulation of two 16-bit multiply with right shift by 15 |
| MAC_L_MRA0 | 1010000010 | First data of accumulation of two 16-bit multiply |
| MAC_L_MRA | 1010000000 | Accumulation of two 16-bit multiply |
| MAC_L_MRA1 | 1010000100 | Last data of accumulation of two 16-bit multiply |
| MAC_L_MSU0 | 1010101010 | First data of accumulation with substrata of two 16-bit multiply with left shift by 1 |
| MAC_L_MSU | 1010101000 | Accumulation with substrata of two 16-bit multiply with left shift by 1 |
| MAC_L_MSU1 | 1010101100 | Last data of accumulation with substrata of two 16-bit multiply with left shift by 1 |
| MAC_L_MSUR0 | 1010111010 | First data of accumulation with substrata of two 16-bit multiply with right shift by 15 |
| MAC_L_MSUR | 1010111000 | Accumulation with substrata of two 16-bit multiply with right shift by 15 |
| MAC_L_MSUR1 | 1010111100 | Last data of accumulation with substrata of two 16-bit multiply with right shift by 15 |
| MAC_I_MAC0 | 1011000010 | first data of accumulation of two 16-bit integer multiply |
| MAC_I_MAC | 1011010000 | Accumulation of two 16-bit integer multiply with right shift 1 |
| MAC_I_MAC 1 | 1011010100 | Last data of accumulation of two 16-bit integer multiply with right shift by 1 |
| MAC_I_MULT | 1011011110 | two 16-bit integer multiply |
| MAC_I_ADD | 1011000110 | two 16-bit adder |
| MAC_I_SUB | 1011100110 | two 16-bit substrate |

One bit, MACOP [24], is reserved for the MACOP extension.

In operation of the SVP, many operations are applied to a sequence of data. That is, the SVP operates in a single-instruction-multiple-data mode. The accumulator and compare unit is used for this purpose.

In each output of the MAC function unit, an index (4 bits) of the MAC unit is combined to the output value to provide a 36-bit wide value. This index helps to identity the position of maximum value when the compare function selects a maximum value from the 10 MAC outputs or from a sequence of data. Figure 6 shows the structure and the principle of operation the accumulator and compare unit, which includes a plurality of adders 610, shift registers 612, registers 614, a multiplexer 616 and a rounding unit 618. The adder and compare unit are each 32 bits wide.

A control word, **ACUCTRL**, of 6 bits indicates which operation is carried out in the accumulator and compare unit. Table 8 shows the combination of the control word. The control word has three parts, namely function selection (FS), register reset selection (RRS) and rounding selection (RS).

**Table 8**

| | | |
|---|---|---|
| b5 - b4 | b3 - b2 | b1 - b0 |
| RS | RRS | FS |
| Rounding selection | Register reset | Function selection |

Table 9 shows the combination of **FS**, which contains four options.

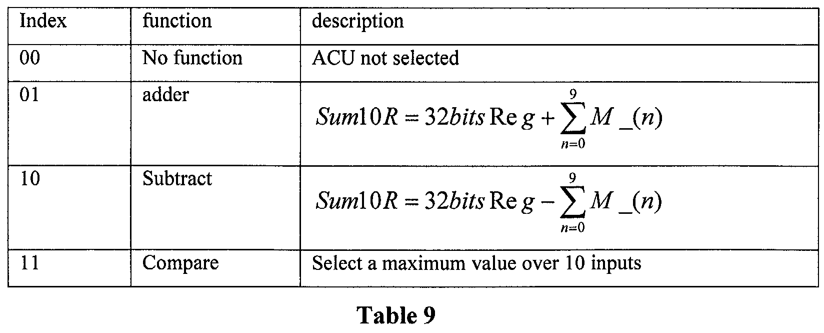

Table 10 shows a combination of register reset state (RRS), which indicates the 32bitsReg's states.

**Table 10**

| Index | states | description |
|---|---|---|
| 00 | NULL | Register value does not change |
| 01 | 32bitsRegA= 0 | Set register to zero |
| 10 | 32bitsRegC= 0 | Set register to zero |
| 11 | reserved | |

Table 11 shows a combination of rounding selection **(RS)**, where one bit is used to select rounding input, and the another bit is reserved.

**Table 11**

| Index | code | description |
|---|---|---|
| 00 | 32bitsRegA | The add' value to be rounded |
| 01 | 32bitsRegC | The compare' value to be rounded |

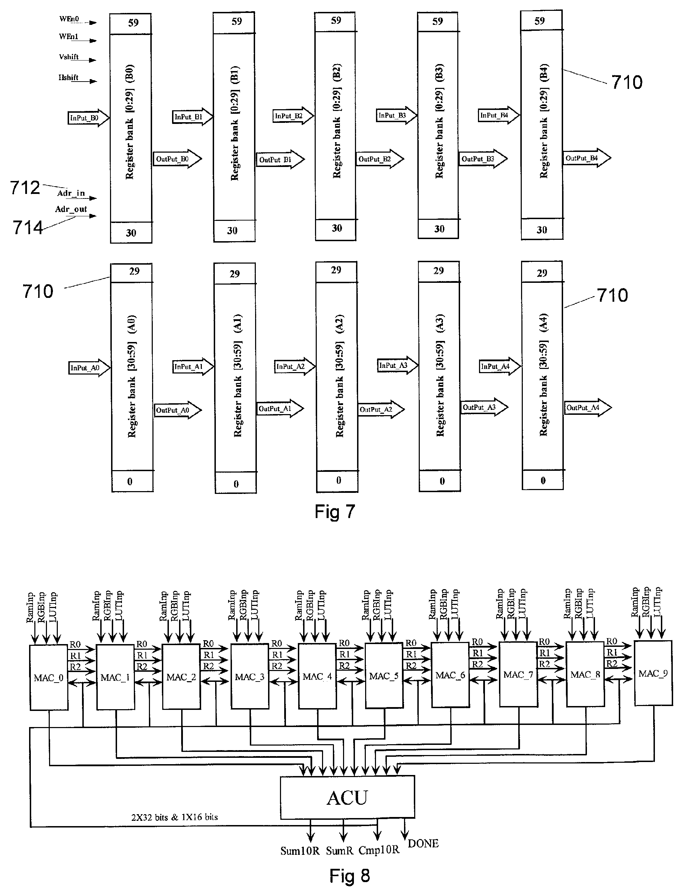

The register bank, as shown in Figure 7, has 10 blocks 710, and each block has 32 x 16-bit cells, one 16-bit data input port and, and one 16-bit data output port. The register bank has two address ports 712, 714, one is for the input data address, and the other is for the output data address. An 8-bit control word identified as RGBCW determines the input and output of register bank.

The 8-bit control word consists of two parts, RGBWS and RGBWE. The REBWE, bit0 - bit2, is a write-enable code, which indicates which register block is to be written. The RGBWS, bit3 - bit6, is the register bank input data selection signal, which indicates which data will be written. One bit is reserved. Table 12 shows the decoded write-enable control signal.

**Table 12**

| Index | Write enable signal (10 bits) | Description |
|---|---|---|
| 000 | 0000000000 | Write not available |
| 001 | 1111111111 | 10 blocks can be written |
| 010 | 0000011111 | 5 blocks (A0∼A4) can be written |
| 011 | 1111100000 | 5 blocks (B0∼B4) can be written |
| 100 | reserved | For some data write to specified |
| 101 | reserved | Blocks |
| 110 | reserved | |
| 111 | reserved | |

Table 13 shows a combination of register bank input data.

**Table 13**

| index | Input data | Description |
|---|---|---|
| 0000 | Zero | Reset the specified register to zero |
| 0001 | RAMInp | Load the data from RAM block in seris format through block A0 |
| 0010 | RAMInp shift right by 1 bit | Load the data from RAM block in seris format through block A0 |
| 0011 | MacOutput[15:0] | Load the low part of MAC output |
| 0100 | MacOutput[31:16] | Load the high part of MAC output |
| 0101 | SUMR | Load the SUMR of ACU |
| 0110 | 10 Reg_1 | Load 10 Reg_1 of ACU |
| 0111 | 10 buffer Registers | Load 10 buffer register's data |
| 1000 | RGB(N)to RGB(M) | Copy data from two row data |
| 1001 | RGB(N)(i)to RGB(N)(i+1) | Shift right by 1 |
| 1010 | RGB(N)(i)to RGB(N)(i-1) | Shift left by 1 |
| 1011 | reserved | |
| 1100 | reserved | |
| 1101 | reserved | |
| 1110 | reserved | |
| 1111 | reserved | |

Figure 8 illustrates the interconnection of the ten MAC function units MAC_0 .. MAC_9 and the ACU block. Each MAC function unit MAC_0 ... MAC_9 has three inputs, which are fed from outside the operation unit, being RAM data input (RamInp), register bank data input (RGBInp) and look-up table data input (LUTInp).

The SVP operation unit can handle ten 16-by-16-bit multipliers at the same time and the results of each MAC function unit MAC_0 ... MAC_9 can be summed or compared in the ACU block. The SVP operation unit can calculate all of general operations related to multiplication, addition or subtraction for 16-bit input data.

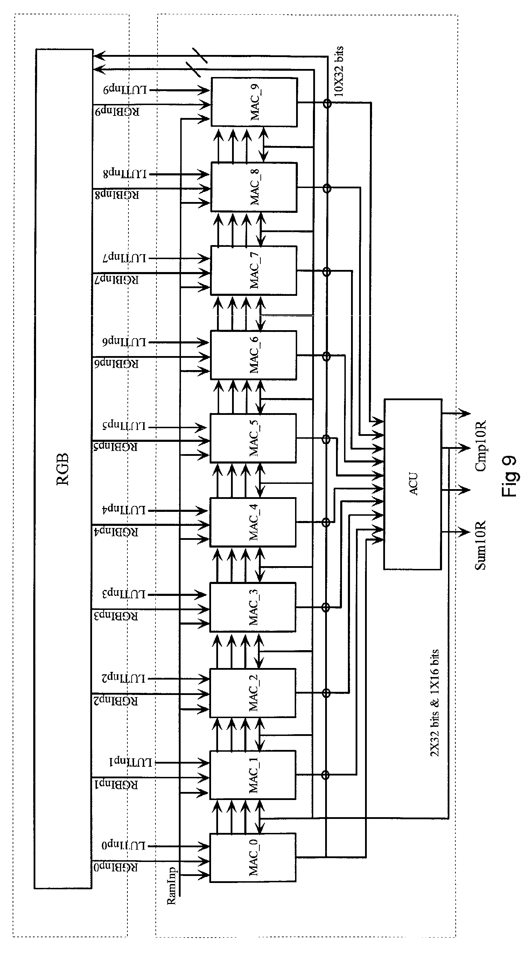

Figure 9 shows the interconnection between the SVP operation unit, shown generally at 910, and the register bank RGB shown generally at 912. The input, LUTInpO, is from the 10-sub-table function block, and the RamInp is from SPRAM block. The operation of the SVP is controlled by a control word.

The accelerator has two storage banks. One bank is ROM, and the other is single-port RAM. Each cell of ROM and the RAM is 16 bits wide. The size of RAM and the ROM is dependent on which algorithm will be operated in the processor. In this embodiment, the maximum address number for the RAM is 4096, which means the RAM has a capacity of 4K-by-16-bit.

In embodiments that operate as an ITU g723.1 speech codec, the ROM required is 10K-by-16-bit ROM, which is divided into 10 portions, each has 1K by 16-bit. The RAM size is 3K-by-16-bit, which is for all of the processing data.

The address generation (AdrGen) block consists of seven counters, namely Loop-1 counter (range 0 - 15), RGB address generator (range 0 - 31), Loop-2 counter (range 0 - 127), an Up-down counter (range 0 - 255), Look-up-table read address generator (range 0 - 1023), RAM read address generator (range 0 - 2047 or up to 4095), and RAM write address generator (range 0 - 2047 or up to 4095). The initial values are fed by the data control block (DatCtrl). These addresses indicate locations of the data in the RAM, ROM, look-up-table and register bank to be read or written.

In general, an address generator has a start value, counter length, enable control, counter step length, etc. For example, Table 14 shows a set of address counter initial value, where the Offset is for the counter start point, and the length is for the stop point.

**Table 14**

| | | | |
|---|---|---|---|
| State | Step Length | Length | Offset |

The bit size of the Offset and Length differ between different address generators. It has 5 bits for the RGB address generator, and it is 12 bits wide for the RAM address generator.

The Step Length specifies the counter increment per clock cycle when an enable signal is asserted. Two bits are used to define the step length. Table 15 shows the combination of the step length.

**Table 15**

| Index | Step length | description |
|---|---|---|
| 00 | 0 | Null |
| 01 | 1 | Increment by 1 |
| 10 | 2 | Increment by 2 |
| 11 | reserved | |

The State (3 bits) is defined for the address generator operation. Tables 16 shows a set of the operation states.

**Table 16**

| Index | states | Description |
|---|---|---|
| 000 | up | Up-counter |
| 001 | down | Down-counter |
| 010 | Up_2 | Up-counter with two continuous addresses for every enable signal |
| 011 | Up_modifier | Add modifier to the counter value |
| 100 | Up_Jmp | Up counter with jump option |
| 101 | Up_2_Jmp | Up-counter with two continuous addresses for every enable signal with jump option |
| 110 | reserved | |
| 111 | reserved | |

Table 17 shows an initial value bit allocation of Loop-1 counter, which has 8 bits to set the initial value. Both parameters of the state and the step length are fixed. The range of the output is from 0 to 15.

**Table 17**

| | | | |
|---|---|---|---|
| State (Fixed) | Step length (Fixed) | Length[3:0] | Offset[3:0] |

Table 18 shows an initial value bit allocation of the RGB address generator, which has 10 bits to set the initial values. Both parameters of the state and the step length are fixed. The range of the output is from 0 to 31.

**Table 18**

| | | | |
|---|---|---|---|
| State (Fixed) | Step length (Fixed) | Length[4:0] | Offset[4:0] |

Table 19 shows an initial value bits allocation of Loop-2 counter, which has 17 bits to set the initial value. The state has 1 bit and the step length has 2 bits.

**Table 19**

| | | | |
|---|---|---|---|
| State [0] | Step length [1:0] | Length[6:0] | Offset[6:0] |

Table 20 shows an initial value bits allocation of Up-down counter, which has 21 bits to set the initial value. The state has 3 bit and the step length has 2 bits.

**Table 20**

| | | | |
|---|---|---|---|
| State [2:0] | Step length [1:0] | Length[7:0] | Offset[7:0] |

Table 21 shows initial value bit allocation of Look-up table read address generator, which has 31 bits to set the initial value. The state has a 3-bit and the step length has 2-bit length.

**Table 21**

| | | | |
|---|---|---|---|
| State [2:0] | Step length [1:0] | Length[9:0] | Offset[9:0] Modifier[6:0] |

Table 22 shows initial value bits allocation of the RAM read address generator, which has 70 bits to set the initial value. The state has 3 bits with one extra bit for Mod operation selection, and the step length has 2 bits.

The RAM read address generation has both jump and mod functions. In the Jump function, when the counter value is equal to the jump value, then the counter output will jump to a value which is equal to the counter value plus the jump size. Then the counter is continually incremented based on the jump value. In the case of mod operation, when the counter is equal to the MOD value, the counter is set zero, then counts again.

**Table 22**

| | | | |
|---|---|---|---|
| State [2:0] MODselection[0] | Step length [1:0] | Length[11:0] | Offset[11:0] Modifier[11:0] Jump Value[11:0] Jumpsize[7:0] MOD [7:0] |

Table 23 shows initial value bits allocation of the RAM write address generator, which has 42 bits. The state has 3 bits with one extra bit for by-pass selection, and the step length has 2 bits. This generator has a bypass function. When the bypass option is true, the output will be equal to the ByAddr value.

**Table 23**

| | | | |
|---|---|---|---|
| State[2:0] Bypass election[0] | Step length[1:0] | Length[11:0] | Offset[11:0] ByAddr[11:0] |

The data control block is a management block. Its function is to decode micro-code from the FSM block, and send the decoded code to AdrGen and SVP blocks. The accelerator is driven under control of the decoded code.

When a micro-code is received at the DatCtrl block, this code is decoded into two parts, one is for address generation, and the other is SVP operation code. For address generator code, it resets the seven counter initial valves, and create the corresponding addresses for the data read and write. These addresses will be sent to the SPRAM, 10-sub-table and SVP to read and write the data.

For the SVP operation code, the block contains all of the information discussed above. The SVP will carry out an operation based on the operation code and the selected data presented to it. The result is then sent back to a selected address.

The programmable ROM, as shown in Figure 10, contains a list of micro-codes. Each micro-code has 64 bits. A program address generator controls it. A DONE signal from SVP and a READY signal from AdrGen are combined into an enable signal for the generator.

A list of micro-code implements a specified DSP algorithm in the accelerator. For different DSP algorithm implementations, the list of micro-code will be changed. In Figure 2, the START signal sets the generator in operation, and the DATADEF provides the start point and end point of the micro-words. The INSTRL presents the instruction type, e.g. short, medium or long_medium instructions (see instruction design notes). The JUMPC and JMPADR is related the address jumping option.

As discussed above, there are four types of instruction, referred to as "short", "medium", "long-medium", and "long" used by SVP accelerator.

The short instruction contains 64 bits, and it works on the operation between RGB and registers or set one loop counter only. The execution signal, EXEC, is asserted when the short instruction is read.

The medium instruction has 128 bits, and it works on the operation between RGB and either of RAM or LUT storage, and one or two loop counter settings.

The long-medium instruction has 192 bits. It works on the operation among the RGB, RAM, LUT and registers, and jump operation of the micro-code.

The long instruction has 256 bits, which have not yet been defined.

### Short instruction

The short instruction has one micro control word with 64 bits. Table 24 shows the definition of the short instruction.

The short instruction specifies operation among the RGB and register data, or one loop counter setting. The 64 bits are defined below.

**Table 24**

| | | | | | | | | | | |
|---|---|---|---|---|---|---|---|---|---|---|
| LCS | WDBS | ADGM | WL0 | RL0 | WADR0 | RADR1 | ISE | RDBS | OP | PCTR |
| [60:57] | [56:54] | [53:50] | [49:46] | [45:42] | [41:33] | [32:38] | [18:15] | [14:10] | [9:2] | L =0 |

**PCTRL [1:0]:** This is the index of the instruction. The PCTRL will control the program ROM address generator and execution signal generation. If PCTRL has value 00, the program ROM address generator will increase by one until next the Enable signal arrives. Otherwise, the program ROM address generator will increase by one until the PCTRL is 00. The execution signal will be created when PCTRL is 00.
**OP[9:2]:** the index of operation control words.
   In each instruction, there is one OP. There are 256 defined operations in the SVP accelerator.
**RDBS[14:10]:** Read Data bus selection (5 bits).
   It selects two 16 bits input data from RAM, LUT, RGB, RGF, MLRG0 - 2 for the operation, where RGF is for address register, and MLRG0 - 2 are local storage for the MAC operation unit.
**ISE[18:15]:** MAC unit initial value selection (4 bits).
   The initial value may be some constant value, or the result (optionally shifted) from a MAC unit.
**RADR0[27:19]:** Offsets of RGB read address or loop counter start point (9 bits).
   If RADR0 is not 1FF, it specifies the direct initial address of RGB. Otherwise the offset address will be read from the register files, RGF1.
**RADR1[32;28]:** Offset of RGB read address or start point for loop counter_0.
   The range is from 0 to 32. If RADR1 is not IF, it specifies the direct initial address of RGB. Otherwise the offset address will be read from the register files, RGF2.
**WADR0[41:33]:** Offset of RGB write address or loop counter start or stop point (9 bits).
   If WADR0 is not 1FF, it is for direct initial address. Otherwise the offset address will be read from the register files, RGF0.
**RL0[45:42]:** Data length setting (4 bits) from 1 - 16.
   It provides an end address for the RGB read address generators. If RL0 is not 0, the end address is RL0+RADR0 and RL0+RADR1, otherwise the end address is RGF2+RADR0 and RGF2+RADR1.
**WL0[49:46]:** Data length setting (4 bits) from 1 - 16.
   It provides an end address for the RGB write address generators. If WL0 is not 0, the end address is WL0+WADR0, otherwise the end address is read from RGF3+WADR0.
**ADGM[53:50]:** operation mode of address generators (4 bits).
   It may specify that addresses are to be increased by 1, increased by 2, decreased by 1, decreased by 2, mod operation, and so forth.
**WDBS[56:54]**: Write Data bus selection (3 bits).
   It selects one 16/32 bits output of SVP for RAM, RGB, RGF, MLRG0∼2 after operation, where RGF is for address register, and MLRG0∼2 are local storage for the MAC operation unit.
**LCS[60:57]:** Loop counter selection (4 bits), one bit for each loop counter.
   When RDBS is zero and LCS is not zero, the RADR0, RADR1, WADR0, WL0 and RL0 are used for the start and end point for the specified loop counters.
**[63:61]**: to be defined.

### Medium instruction

Two micro control words (CW_1, CW_0) consist of one medium instruction, see following Table 25, where the CW_0 is a short instruction, and CW_1 provides more options for the offset selections. The medium instruction is for operation among the RAM or LUT with RGB or registers.

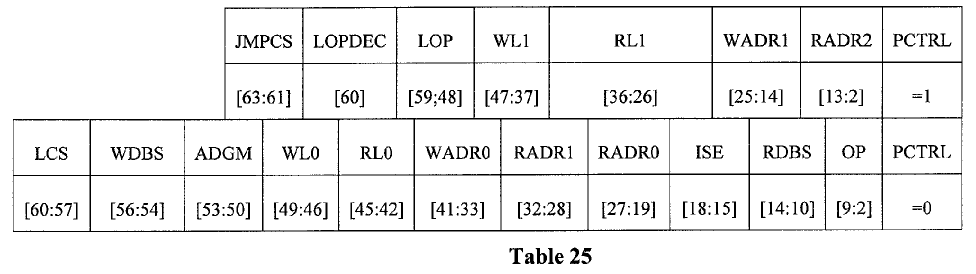

In operation, when the CW_0 is read, the medium instruction will be decoded. The RAM/LUT address offset and data length are assigned from WL1, RL1, WADR 1 and RADR2. The selected loop counters use LOP0, RADR1, WADR0 and WL0 as the start and end points. Up to two loop_counters can be set when RDBS is not zero, otherwise more loop_counters can be set.

**RADR2[13:2]:** Offset for the RAM or LUT read address generators (12 bits).

If RADR2 is not 3FF, it specifies direct initial address offset. Otherwise the offset address will be read from the register files, RGF2.

**WADR1[25:14]:** Offset for the RAM/RGB write address generator (12 bits).

If WADR1 is not 3FF, it specifies direct initial address offset. Otherwise the offset address will be read from the register files, RGF0.

**RL1[36:26]:** Read Data length setting (1 1bits).

It provides an end address for the RAM/LUT read address generators. If RL1 is not 0, the end address is RL1 plus RADR2, otherwise the end address is read from RGF2 plus RADR2.

**WL1[47:37]:** Writing Data length setting (11bits. It provides an end address for the RAM write address generators.

If WL1 is not 0, the end address is WL1 plus WADR1, otherwise the end address is read from RGF3+WADR1.

**LOP[59:48]** : Start or end point for the selected loop counters.

It is combined with the WADR0 for the loop counter 1, 2, and 3.

**LOPDEC[60]** : Loop counter 3 is a bi-directional counter.

The LOPDEC is for the control of up or down operation. When LPPDEC is 1, the counter is in the down operation, otherwise it is up.

**JMPCS[63:61] :** Instruction address jump condition indicator.

The jump address can be derived from LOPO if the loop counter 1, 2 and 3 are not selected or get the jump address can be derived from REG4.

### Long-medium instruction

Three micro control words (CW_2, CW_1, CW_0) constitute a long-medium instruction, see following Table 3, where CW_0 is a short instruction.

When the short instruction (PCTRL=0) is read, the long-medium instruction will be decoded. In the Long-medium instruction, the CW_2 has options to set more loop counters, and directly instruction jumping address with or without conditions.

When both RAM and LUT data are used, the RAM address setting are assigned from CW_1, and LUT address setting are assigned from CW_3.

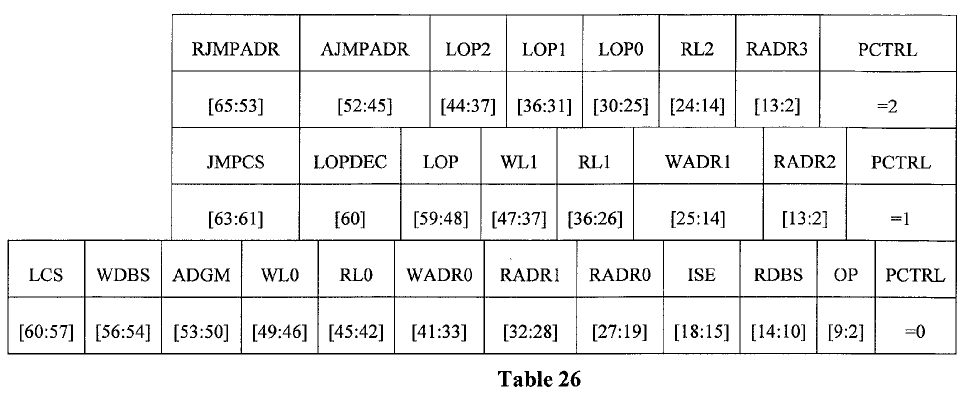

RADR3[13:2] : The offset for the LUT address generator (12 bits).

RL[24:14] : The data length for the LUT address generator (11 bits).

LOP0[30:25]: The end point of loop counter 1 (6 bits).

LOP1[36:31]: The start point of loop counter 1 (6 bits).

LOP2[44:37]: The end point of loop counter 2 (8 bits).

AJMPADR[52:45]: The absolute program jump address (8 bits).

RJMPADR[63:53]: The relative program jumping address (11 bits). The RJMPADR[63] is a sign, which indicates the relative address to be added or subtracted from the current program address.

### Sub-micro-word description

In the instruction definition, there are up to 28 sub-control-words. Some of them are for the data flow control, and some are for the address setting.

### Program word address control (PCTRL)

The PCTRL is an indictor, which shows the status of the instruction. The program word address generator will produce a continuously address for a specified instructions with an enable signal. For example, the address will be N, N+1 and N+2 within three clock cycles for a long-medium instruction. Table 27 shows the definition of the sub-control-word, PCTRL.

**Table 27.**

| PCTRL | Symbol | Description |
|---|---|---|
| 00 | STR0 | control word length = 64 |
| 01 | STR1 | control word length = 128 |
| 10 | STR2 | control word length = 192 |
| 11 | STR3 | Not defined |

### Operation control (OP)

The operation control signal has 8 bits, which represents 256 operations. The 256 operations are partitioned into four groups, the first 64 (0 - 63) operations are for data transfer and logic operations, the second 64 (64 - 127) operations are for arithmetical operations, including multiplication, addition, subtraction and the their combinations. The third 64 (128 - 191) are for some special operations. For example, they include division, Pow2, Log2, Inv_sqrt, Rank (put the data in order, eg, 3, 4, 1 and 2, after Rank, it is 1, 2, 3, 4), Norm_L, Convolution, correlation, cross correlation, and etc. The fourth 64 (192 - 256) are reserved. The correlation between the value of OP and these operations is shown in Table 28.

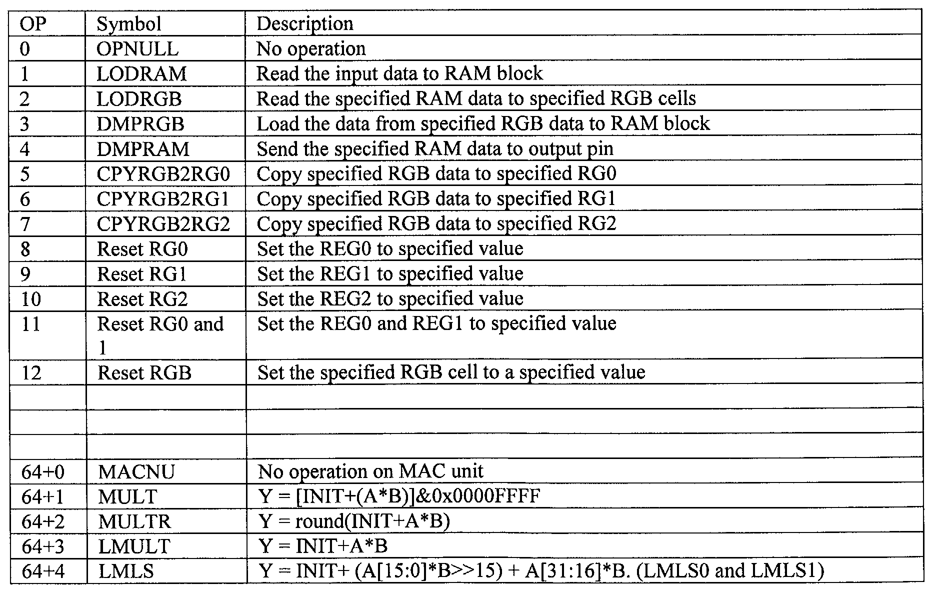

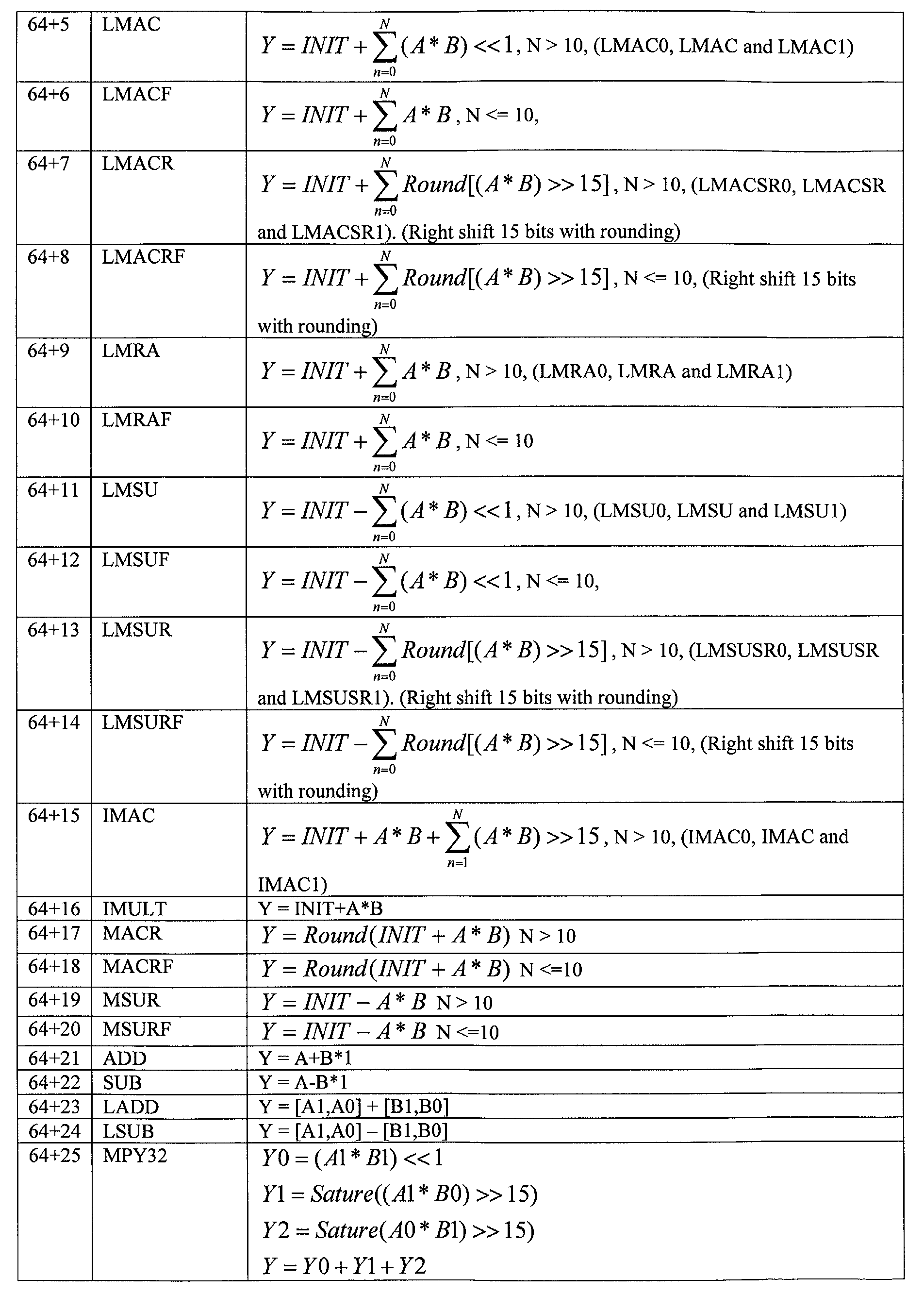

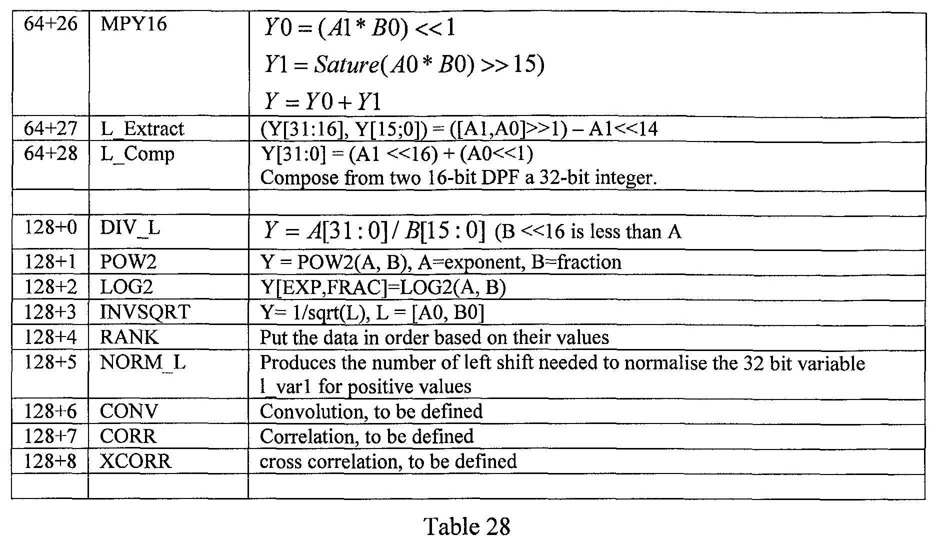

### Read data bus selection (RDBS, 4 bits)

The RDBS value provides read address generator enable signals, and select the read address flags for data read. The enable signal, RENA, has 3 bits. Each bit enables one address generator. It is defined as below.

RENA[0] for RAM read address enable signal

RENA[1] for LUT read address enable signal

RENA[2] for RGB read address enable signal

When RDBS is 0, then the constant values can be assigned for the loop counter setting, as shown in Table 29.

**Table 29**

| DBS | Symbol | Description of Input1(B), input 2(C) |
|---|---|---|
| 0 | NULL | No inputs are selected, ENAR = 000 |
| 1 | Reg0 | Reg 0, Reg 0, ENAR = 000 |
| 2 | Reg01 | Reg 0,Reg 1, ENAR = 000 |
| 3 | Reg02 | Reg 0, Reg 2, ENAR = 000 |
| 4 | Reg0LUT | Reg 0, LUTInp, ENAR = 010 |
| 5 | Reg0RGB | Reg 0, RGBInp, ENAR = 100 |
| 6 | Reg0RAM | Reg 0, RamInp, ENAR = 001 |
| 7 | Reg0RGF | Reg 0, RGF, ENAR = 000 |
| 8 | Reg11 | Reg 1, Reg 1, ENAR = 000 |
| 9 | Reg12 | Reg 1, Reg 2, ENAR = 000 |
| 10 | Reg1LUT | Reg 1, LUTInp, ENAR = 010 |
| 11 | Reg1RGB | Reg 1, RGBInp, ENAR = 100 |
| 12 | Reg1RAM | Reg 1, RamInp,, ENAR = 001 |
| 13 | Reg1RGF | Reg 1, RGF, ENAR = 000 |
| 14 | Reg22 | Reg 2, Reg 2, ENAR = 000 |
| 15 | Reg2LUT | Reg 2, LUTInp, ENAR = 010 |
| 16 | Reg2RGB | Reg 2, RGBInp, ENAR = 100 |
| 17 | Reg2RAM | Reg 2, RamInp, ENAR = 001 |
| 18 | Reg2RGF | Reg 2, RGF, ENAR = 000 |
| 19 | RGB2 | RGBInp, RGBInp, ENAR = 100 |
| 20 | RGBLUT | RGBInp, LUTInp, ENAR = 110 |
| 21 | RGBRAM | RGBInp, RamInp, ENAR = 101 |
| 22 | RGBRGF | RGBInp, RGF, ENAR = 100 |
| 23 | RAM2 | RamInp, RamInp, ENAR = 001 |
| 24 | RAMLUT | RamInp, LUTInp, ENAR = 011 |
| 25 | RAMRGF | RamInp, RGF, ENAR = 001 |
| 26 | reserved | |
| 27 | reserved | |
| 28 | reserved | |
| 29 | reserved | |
| 30 | reserved | |
| 31 | reserved | |

### Initialization of MAC unit (ISE)

The ISE is an option for the initial value selection of MAC unit, as follows:

**Table 30**

| INIT | Symbol | Description |
|---|---|---|
| 0000 | CNS0 | Set the value to zero |
| 0001 | CNS04 | Set the value to 0400 |
| 0010 | CNS07 | Set the value to 0700 on MAC0, others to zero |
| 0011 | CNSOE | Set the value to OE00 on MAC0, others to zero |
| 0100 | CNSEO | Set the value to E000 on MAC0, others to zero |
| 0101 | VDRGB | Set the value with RGB |
| 0110 | VDMACD | Set the value with MACD |
| 0111 | VDACCD | Set the value with ACCD |
| 1000 | VDNACCD | Set the value with negative ACCD |
| 1001 | VDACCDL 1 | Set the value with ACCD <<1 |
| 1010 | VDACCDL 2 | Set the value with ACCD <<2 |
| 1011 | VDACCDL 3 | Set the value with ACCD <<3 |
| 1100 | INPTD | Set the value from the instruction decoded (TBD) It may use a medium instruction or long instruction |
| 1101 | reserved | |
| 1110 | reserved | |
| 1111 | reserved | |

### Offset of read address 0 (RADR0)

A 9-bit value will be used for the RGB address generator when the RGB data path is selected by the RDBS or it may use for the loop counter setting when RDBS is 0. If RADR0 is 1FF, the offset value is got from RGF1. The 9 bits are partitioned into two parts, RADR0 [3:0] is for row offset and RADR0 [8:4] for column offset.

### Offset of read address 1 (RADR1)

A 5-bit value used as RGB address offset. It is assumed that the read data are stored in the same columns for read data A and read data B, but in different rows when both data are read from the RGB. If RADR1 is IF, the offset value is got from RGF2.

### Offset of write (WADR0)

A 9-bit value used as an indirect/direct write address offset. If WADR0 is 1FF, the offset value is got from RGF0. The 9 bits are partitioned into two parts, WADR0 [3:0] is for row offset and WADR0 [8:4] for column offset.

### Data length for data reading (RL0)

A 4-bit value used as the end point of the read address of RGB. If RADR0 [3:0] is less than 11, the data read is in serial; otherwise it is in parallel. When in the serial format, the data length will be extended to RADR0 [3:0]* RL0. For example, if the RADR0[3:0] is 10, and RL0 is 6, it will take 60 clock cycles to read 60 data from the RGB.

### Data length for data writing (WL0)

A 4-bit value will be used as the end point of the read address of RGB. If WADR0[3:0] is less than 11, the data write is in serial, otherwise it is in parallel. When in the serial format, the data length will be extended to WADR0[3:0]* WL0. For example, if the WADR0[3:0] is 10, and WL0 is 6, it will take 60 operations to write 60 data items to the RGB.

### Operation mode of address generators (ADGM)

ADGM is address generator operation mode. It has 4 bits and each bit controls one operation function of the address generator.
ADGM[0]: increasing/decreasing control, 0:increasing (I: increasing), 1:decreasing (D: decreasing)
ADGM[1]: step length control, 0: increasing/decreasing by 1(O: one), 1: by 2(T: two)
ADGM[2]: mod operation, 0: no (N), 1: yes(Y)
ADGM[3]: step length control for RAM write address only, 0: increasing /decreasing by 1(S:short-16 bits), 1: by 2 (L:long- 32 bits)
ADGM[0]:I(0)/D(1)
ADGM[1]: O(0)/T(1)
ADGM[2]:N(0)/Y(1)
ADGM[3]: S(0)/L(1)

**Table 30**

| ADGM | Symbol | Description |
|---|---|---|
| 0 | SNOI | Both read and write Increase by 1 |
| 1 | SNOD | read decrease by 1 and writer increase by 1 |
| 2 | SNTI | Both read and write Increase by 1 |
| 3 | SNTD | read decrease by 2 and writer increase by 1 |
| 4 | SYOI | Mod with increase by 1 (read), write increase by 1 |
| 5 | SYOD | Mod with decrease by 1(read), write increase by 1 |
| 6 | SYTI | Mod with increase by 2 (read), writer increase by 1 |
| 7 | SYTD | Mod with decrease by 2 (read), writer increase by 1 |
| 8 | LNOI | Both read and write Increase by 2 |
| 9 | LNOD | read decrease by 1 and writer increase by 2 |
| 10 | LNTI | Both read and write Increase by 2 |
| 11 | LNTD | read decrease by 2 and writer increase by 2 |
| 12 | LYOI | Mod with increase by 1 (read), write increase by 2 |
| 13 | LYOD | Mod with decrease by 1(read), write increase by 2 |
| 14 | LYTI | Mod with increase by 2 (read), writer increase by 2 |
| 15 | LYTD | Mod with decrease by 2 (read), writer increase by 2 |

### Write data bus selection (WDBS, 3 bits)

The WDBS selects the writing data bus. It is defined below. The WDBS will provide a write address generator enable signal (WENA) or register input data selection (RIS). The WENA has 2 bits, and RIS has three bits, where WENA[0] is for RAM write address generator and WENA[1] is for RGB write address generator.

**Table 31**

| WDBS | Symbol | Description |
|---|---|---|
| 000 | WRGB | Register bank, ENAW = 10 |
| 001 | WRGF | Register file (for address) , ENAW = 00 |
| 010 | WRAM | RAM block, ENAW = 01 |
| 011 | WREG0 | Local buffer Reg0 of MAC unit (RIS) |
| 100 | WREG1 | Local buffer Reg1 of MAC unit (RIS) |
| 101 | WREG2 | Local buffer Reg2 of MAC unit (RIS) |
| 110 | WRGBRAM | Register bank and RAM, , ENAW = 11 |
| 111 | reserved | |

### 4 loop counters selection

The LCS is a control signal with 4 bits, it selects the loop count in action. It is defined as below:
LCS[3:0]
LCS[0] is for Loop counter 0, 1: selected, 0: no
LCS[1] is for Loop counter 1, 1: selected, 0: no
LCS[2] is for Loop counter 2, 1: selected, 0: no
LCS[3] is for Loop counter 3, 1: selected, 0: no

When LCS[3:0] = 0000, no loop counter is selected.

### Offset of RAM/LUT read address (RADR2)

A 12-bit value used for RAM or look up table read address generators. In medium instructions, the RADR2 is used for either RAM or LUT according the RDBS. In long-medium instructions, it is used for RAM only.

### Offset of RAM/LUT write address (WADR1)

A 12-bit value used for RAM or RGB write address generators. The WADR0 is only used in short instructions; otherwise WADR1 is used for either RAM or RGB according the RDBS. The WADR0 is used for the loop counter setting in the medium or long-medium instruction.

### Data length for data reading (RL1)

An 11-bit value used as the end point of the read address of RAM or LUT.

### Data length for data writing (WL1)

An 11-bit value used as the end point of the write address of RGB or RAM.

### Loop length (LOP)

A 9-bit value that defines the start or end point of the specified loop counter. If RDBS is 0, there two loop counter are set up.

In a short instruction:
Counter 0 (Start, Stop) = (RADR1, WL0)
Counter 1/2/3 (Start, Stop) = (RADR0, WADR0)
LOPDEC can be get from ADGM[0]

In a medium instruction:
If RDBS = 0, there are up to four loop counters to be set.
Counter 0 (Start, Stop) = (RADR1, WL0)
Counter 1(Start, Stop) = (RADR0, WADR0)
Counter 2(Start, Stop) = (RADR2, RL1)
Counter 3(Start, Stop) = (WADR1, WL1)

If RDBS /= 0, there are up to two loop counters can be set.
Counter 0(Start, Stop) = (RADR1, WL0)
Counter 1/2/3 (Start, Stop) = (LOP, WADR0)

In a long_medium instruction:
Counter 0(Start, Stop) = (RADR1, WL0)
Counter 1(Start, Stop) = (LOP1, LOP0)
Counter 2(Start, Stop) = (RADR0, LOP2)
Counter 3(Start, Stop) = (LOP, WADR0)

### Loop counter 2 operation mode (LOPDEC)

A 1-bit control signal is used to control loop counter 2, which can count up or down. LOPDEC is the control signal. When in short instruction, it can be decoded from ADGM[0], otherwise, it is defined as in the medium instruction.

### Program address jump option (JMPCS)

The program address can be changed with or without condition while the program is in the operation. The JMPCS (3 bits) is the control signal to control the jump function. The jump condition is not cleared until the jump has occurred. In the unconditional mode, the jump will be happened after the current operation is finished. In the condition mode, the condition is checked. The following table shows the definition of the JMPCS.

**Table 32**

| JMPCS | Symbol | Description |
|---|---|---|
| 000 | JMPNO | No jump condition is set |
| 001 | JMPNCDA | Jump without condition. Jump to a predefined sub-function (the address is fixed) , and return to the current address when the sub-function is completed |
| 010 | JMPNCDRs | Jump without condition with the current address +/- the jump address. |
| 011 | JMPL2 | Jump under loop counter 2 Flag condition with the current address +/- the jump address. |
| 100 | JMPL3 | Jump under loop counter 3 Flag condition with the current address +/- the jump address. |
| 101 | JMPCMPD | Jump under condition of the compared results with the current address +/- the jump address. |
| 110 | JMPRG | Jumps under loop counter 2 flag with the current address +/- the jump register value. |
| 111 | reserved | |

In medium instructions, the jump address is read from the RADR2 or WADR1 according to the RDBS value. In the long-medium instruction, the jump address is got from the RJMPADR or AJMPADR or both RJMPADR and AJMPADR.

### Offset of LUT address (RADR3)

In long-medium instructions, the RADR3 is for the offset of LUT address.

### LUT data length (RL2)

RL2 is for the data length of LUT address.

### Loop counter settings

LOP0, LOP1 and LOP2 are the start or end point of loop counters. It has been defined in the LOP.

### Program absolute jump address (AJMPADR)

The program address can be change to a fixed address for some specified operation. After that, the address will be jump back. The AJMPADR has 8 bits, which is from 0∼255.

### Program relative jump address (RJMPADR)

With RJMPADR, the program address is the sum of the current address +/- RJMPADR.

### Programming format

To implement any algorithm in the SVP accelerator, a general programming format of instructions is defined as below:
**OP:XXX RADR0:XXXX RADR1:XXXX RL:XXXX WADR:XXXX ISE:XX WL:XXXX ADGM:XX LP0:XXX LP1:XXX LP2:XXX LP3:XXX JMPCS:XX AJMPADR:XXXX RJMPADR:XXXX**

### Key word definition

The **OP, RADR0 RADR1, RL, WADR, ISE, WL, ADGM, LP0, LP1, LP2, LP3, JMPCS, AJMPADR** and **RJMPADR** are indicators of SVP instruction key words. Each key word has two parts, which is separated by a colon ":". The first part is an indicator, and the second part is the operate instruction. In compiling an instruction, the key word indicates which parameters are used. These parameters specify an instruction (short, medium or long_medium) to be converted.

**OP** is for operation, which can be mapped from Table 28.

**RADR0** is for read data address for the data B, see MAC unit.

**RADR1** is for read data address for the data C, see MAC unit.

**RL** is for the read data length.

**WADR** is for write data address.

**ISE** is for initial data selection of MAC unit for the data A, see MAC unit.

**WL** is for writing data length.

**ADGM** is for data address operation format; it could be increased by 1, by 2 or decrease by 1, by 2 or mod operation
**LP0** is for the first loop counter
**LP1** is for the second loop counter
**LP2** is for the third loop counter
**LP3** is for the fourth loop counter
**JMPCS** is for the program address jump operation
**AJMPADR** is for absolute jumping address.
**RJMPADR** is for a relative jumping address.

### Data source to be read

There are seven sources to provide read data, namely Reg0, Reg1, Reg2, LUT, RGB, RAM and RGF.

**Table 33**

| Index | Symbol | description |
|---|---|---|
| 0 | REG0 | 16 bit buffer in MAC unit |
| 1 | REG 1 | 16 bit buffer in MAC unit |
| 2 | REG2 | 16 bit buffer in MAC unit |
| 3 | LUT | 16 bit look up table |
| 4 | RGB | 16 bit register bank |
| 5 | RAM | 16 bit RAM |
| 6 | RGF | 16 bit register file which are shared with data and address |

### The read address is represented as the following structure:

**RADR0**:SS_VVVV, **RADR1**:SS_VVVV.

Where the **RADR0/RADR1** are the indicator of read addresses, and SS is an indicator of data source (listed in the Table 11), and the VVVV is an offset of the address.

### Data length

The data length is represented as **RL**:XXXX or **WL**:XXXX, where the XXXX can be any constant value for the number of data items to be read or written.

### Data source to be written

There are six sources for the data to be written. The write address is represented as **WADR**:SS_VVVV, where the SS is the index of the data source (listed in Table12), and VVVV is an offset of the writing address.

**Table 34**

| Index | Symbol | description |
|---|---|---|
| 0 | REG0 | 16 bit buffer in MAC unit |
| 1 | REG1 | 16 bit buffer in MAC unit |
| 2 | REG2 | 16 bit buffer in MAC unit |
| 3 | RGB | 16 bit register bank |
| 4 | RAM | 16 bit RAM |
| 5 | RGF | 16 bit register file which are shared with data and address |

### Initial value selection

The initial value of MAC unit is represented as **ISE:**XX, where the value, XX, is coded in the Table 35.

### Operation format of address generators

The operation of address generators is controlled by the ADGM, which is presented as **ADGM:**XXXX, where the value, XXXX, is coded in the Table 8.

### Loop counter setting

The loop counter settings are represented as **LP0:**(SS EE), **LP1:**(SS, EE), **LP2**:(SS, EE, F) and **LP3**:(SS, EE). The SS is for the start point, and EE is for the end point of the loop counters. The loop counter 2 has bio-direction function, so The F is for the up/down control in **LP2**.

The codec constructed in accordance with the above description can be programmed to perform coding and decoding according to a wide range of coding schemes, including, in particular, CELP coding in accordance with accepted standards. As will be recognised by those skilled in the technical field, the codec represents a programmable processor with a specialised instruction set. It is therefore possible to write a program that instructs the codec to perform the encoding or decoding required for a particular application. By taking advantage of the parallel processing capabilities of the accelerator, and assigning computationally less-intensive tasks to the DSP 112, a high-performance and cost effective implementation of a codec can be achieved.

### Implementation on a Semiconductor Chip

Most typically, the invention will be embodied as a core in a semiconductor chip, e.g. a silicon chip or digital signal processor. Listing 1 below is a hardware description, or definition, language (HDL) description of the layout of an accelerator core suitable for use in the embodiment of the invention as described above. The HDL code may be used in conventional manner to produce a semiconductor chip design using conventional hardware synthesis tools.

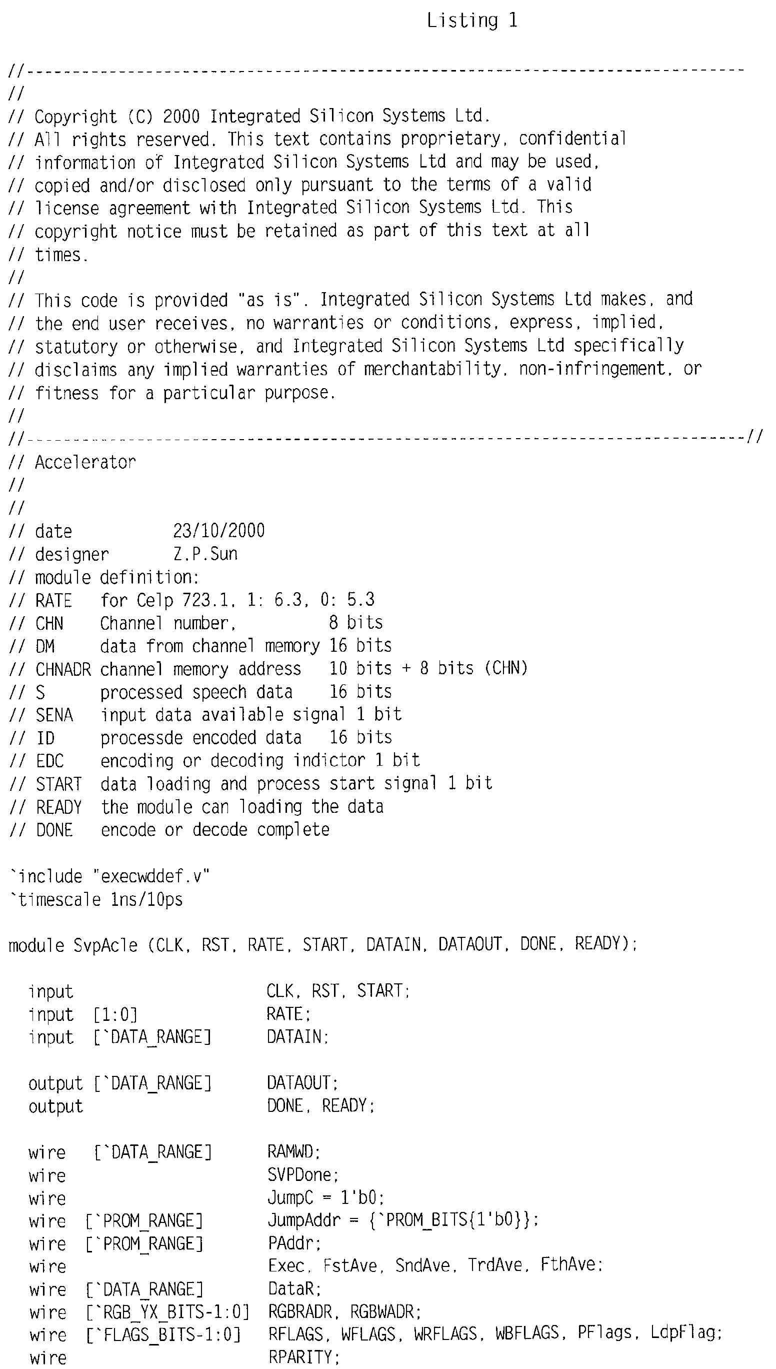

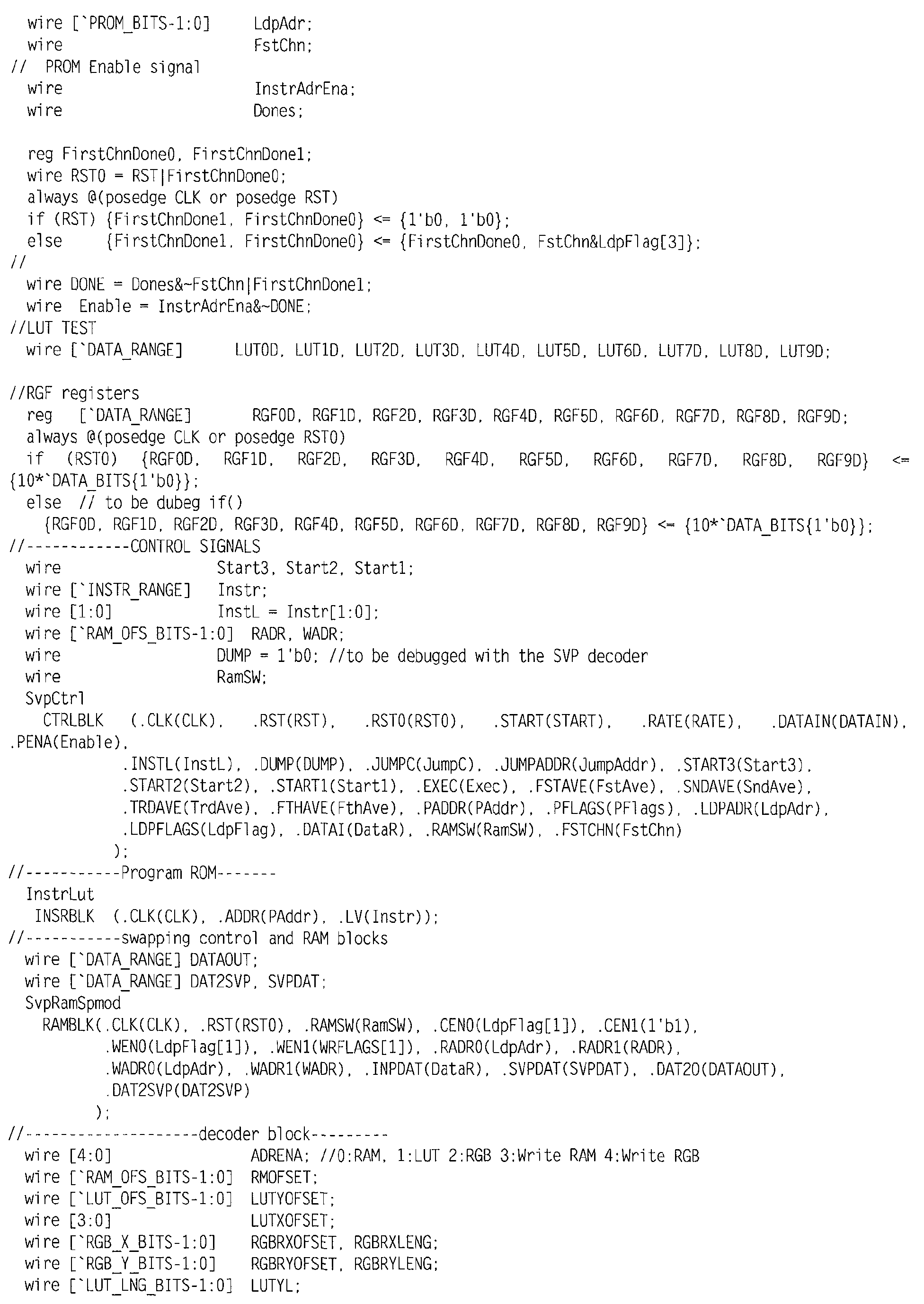

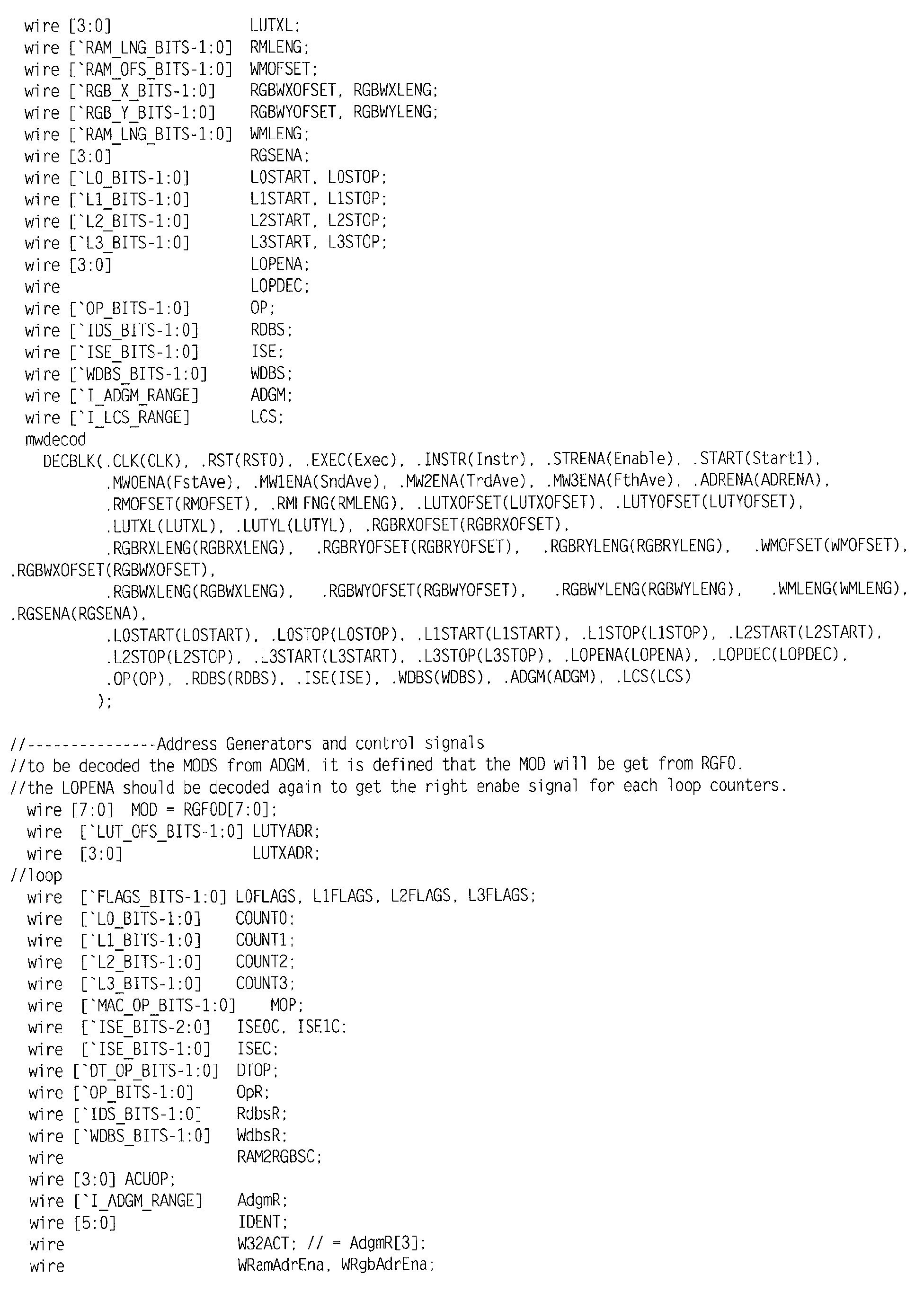

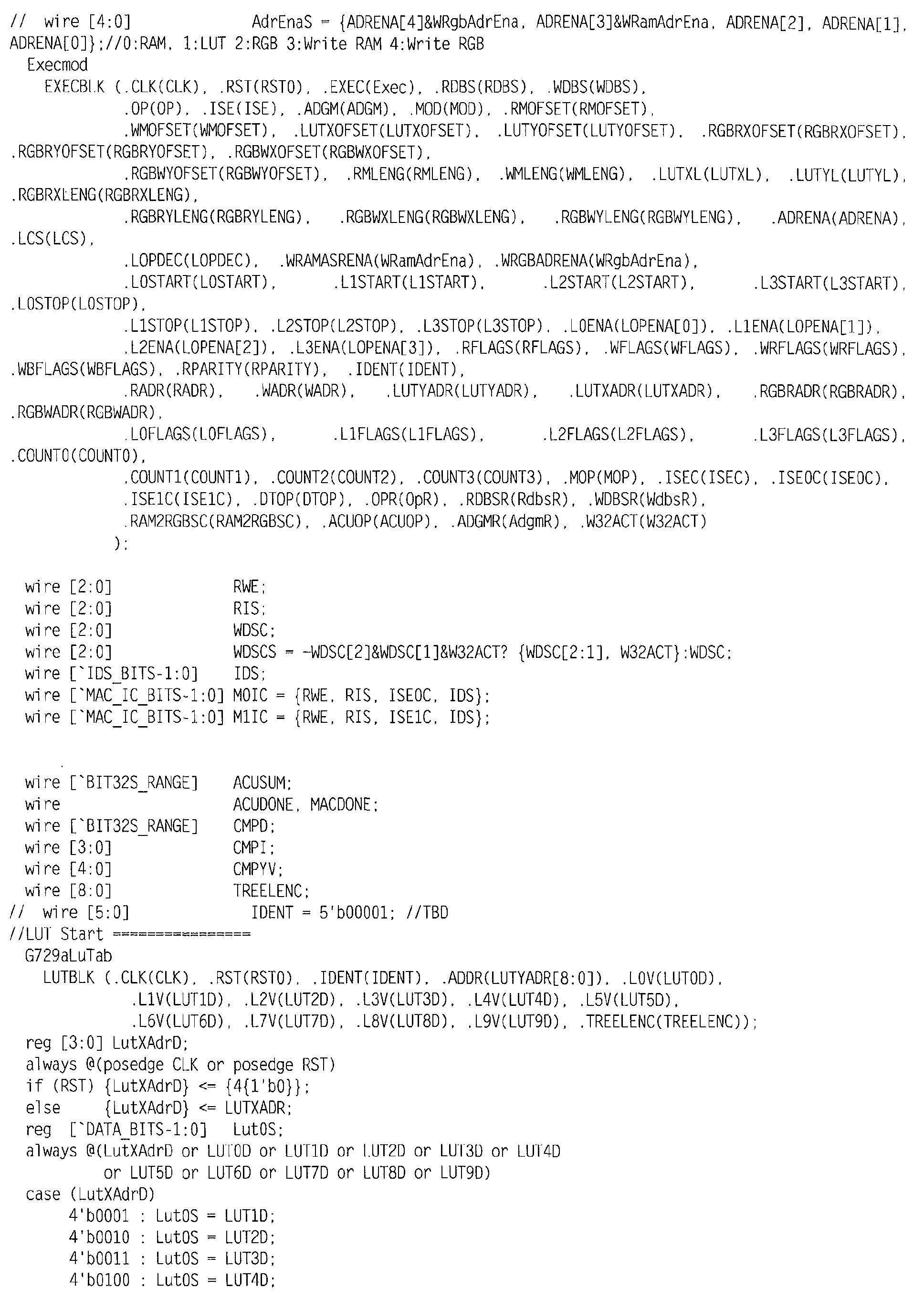

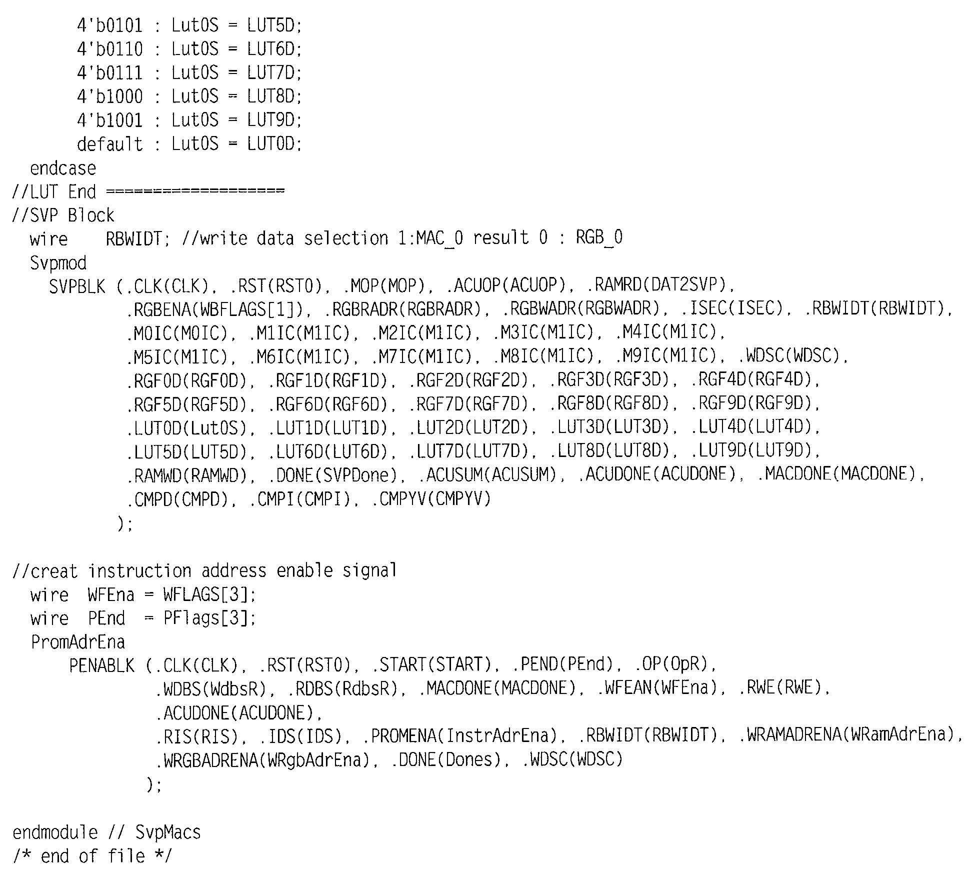

## Claims

1. A codec (110) comprising a programmed digital signal processor (112) and an accelerator core (116) **characterised in that** computation of a coding algorithm is divided between the digital signal processor (112) and the accelerator core (116), computationally relatively intensive parts of a coding algorithm being performed by the accelerator core.

2. A codec according to claim 1 in which the accelerator core (116) includes a processor structure (SVP) that is capable of processing multiple items of data simultaneously.

3. A codec according to claim 2 in which the processor (SVP) is a vector processor.

4. A codec according to claim 2 or claim 3 in which the processor structure has a single-instruction multiple-data architecture.

5. A codec according to any one of claims 2 to 4 in which the processor structure (SVP) has an instruction set that is optimised to perform encoding to a predetermined standard.

6. A codec according to claim 5 in which the instruction set is optimised to perform CELP coding of speech signals.

7. A codec according to any preceding claim in which the accelerator core (116) has includes a plurality of similar operational units (MAC_0 .. MAC_9) capable of carrying out simultaneous data processing operations.

8. A codec according to claim 7 in which an operation can be assigned for performance by one or more of the operational units (MAC_0 .. MAC_9) on a plurality of data elements.

9. A codec according to claim 8 in which the number of operational units that perform a given operation can be determined under programmatical control.

10. A codec according to any one of claims 7 to 9 including a register bank (422), the operational units (MAC_0 .. MAC_9) performing operations on data stored in the register bank (422).

11. A codec according to claim 10 in which each operational unit (MAC_0 .. MAC_9) can store the result of an operation in the register bank (422).

12. A codec according to any one of claims 7 to 11 in which each operational unit (MAC_0 .. MAC_9) can perform operations upon the output of one or more of the operational units.

13. A codec according to any one of claims 7 to 12 in which an operation can be performed on the outputs of a plurality of the operational units (MAC_0 .. MAC_9) to derive a further output value.

14. A codec according to claim 13 in which the outputs of a plurality of the operational units (MAC_0 .. MAC_9) can be summed.

15. A codec according to any one of claims 7 to 14 in which each operational unit (MAC_0 .. MAC_9) can access a common memory unit (114).

16. A codec according to claim 15 in which the common memory unit includes a ROM.

17. A codec according to claim 15 or claim 16 in which the common memory unit includes a RAM (RAM_0, RAM_1).

18. A codec according to any one of claims 7 to 17 in which each operational unit (MAC_0 .. MAC_9) is a MAC unit.

19. A codec according to any preceding claim in which the accelerator core (116) is operative to execute program instructions as a vector processor.

20. A codec according to claim 19 in which the program instructions are executed as microcode.

21. A codec according to claim 19 or claim 20 including a decoder (416) by means of which the program instructions are decoded for execution by one or more operational units (MAC_0 .. MAC_9).

22. A codec according to claim 21 in which the decoder includes a finite state machine.

23. A codec according to claim 21 or claim 22 in which the decoder includes a programmed memory device (PROM).

24. A computer program product for defining a codec, the codec comprising a programmed digital signal processor and an accelerator core **characterised in that** of a coding algorithm is divided between the digital signal processor and the accelerator core, computationally relatively intensive parts of a coding algorithm being performed by the accelerator core.

25. A computer program product according to claim 24 expressed in a hardware definition language.
